# FASCICULE DE BREVET EUROPEEN

(11) **EP 3 381 616 B1**
(45) Date de publication et mention de la délivrance du brevet: **21.08.2019**
(21) Numéro de dépôt: 18164848.6
(22) Date de dépôt: 29.03.2018
(51) Int. Cl.: B25B 27/00, F02M 61/14, B25D 1/16, B25B 19/00, F02M 25/022, B25B 27/04

(54) **EXTRACTEUR ET PROCEDE D'EXTRACTION D'UN INJECTEUR COINCE DANS LA CULASSE D'UN MOTEUR DE VEHICULE AUTOMOBILE**
AUSZIEHER UND AUSZIEHVERFAHREN EINES IN EINEM ZYLINDERKOPF EINES KRAFTFAHRZEUGMOTORS EINGEKLEMMTEN INJEKTORS
EXTRACTOR AND METHOD FOR EXTRACTING AN INJECTOR STUCK IN THE CYLINDER HEAD OF A MOTOR VEHICLE ENGINE

(30) Priorité: 31.03.2017 BE 201705230; 31.03.2017 FR 1770327
(43) Date de publication de la demande: 03.10.2018
(73) Titulaire: Hubitools S.A., 1300 Wavre (BE)
(72) Inventeur: DUDOT, Yannick, 57450 Cappel (FR)
(74) Mandataire: ABYOO

(56) Documents cités:
- DE-U1-202005 003 641
- JP-A- H08 261 114
- US-A- 5 075 947
- US-A- 5 109 739

## Description

L'invention se situe dans le domaine des procédés et de l'outillage pour la mécanique automobile et concerne en particulier les procédés et outils pour l'extraction d'un injecteur de moteur de véhicule, par exemple de véhicule automobile.

Dans un moteur à combustion de véhicule automobile, le carburant est mis sous pression avant d'être introduit dans une chambre à combustion du moteur à l'aide d'un injecteur. Cet injecteur est logé dans une culasse et présente un corps dont une partie fait saillie à la surface de la culasse. Cette partie en saillie comprend classiquement une commande électrique reliée au système électronique du véhicule et un raccord haute-pression par lequel arrive le carburant sous pression. Classiquement, la partie saillante de l'injecteur s'étend à l'extérieur de la culasse dans le prolongement du reste du corps et la commande électrique est située à l'extrémité de cette partie saillante. Le raccord haute-pression s'étend quant à lui angulairement par rapport à ladite partie saillante. La commande électrique contrôle un solénoïde présent dans le corps de l'injecteur et dont la position autorise ou interdit le passage du carburant. Le carburant est ensuite injecté directement ou indirectement dans la chambre à combustion par un embout diffuseur de l'injecteur.

Lorsque l'injecteur est usé et qu'il faut le changer, il est nécessaire de l'extraire de son logement par l'extérieur de la culasse. Cette opération peut s'avérer laborieuse lorsque l'injecteur est coincé dans son logement à cause de phénomènes d'oxydation et notamment de présence de calamine. Des procédés et des outils permettant de retirer l'injecteur de son logement sont connus. Classiquement, les procédés consistent à retirer la commande électrique de l'injecteur et à venir y visser un extracteur. Un tel extracteur se présente par exemple sous forme d'un marteau à inertie comprenant une masse enfilée sur une tige présentant un embout. L'injecteur est ensuite extrait suite à la percussion de la masse contre l'embout de la tige selon une direction d'extraction parallèle à l'axe longitudinal de l'injecteur.

Il existe également des procédés et des outils permettant d'extraire l'injecteur par son raccord haute-pression. Un extracteur est fixé audit raccord et comprend une tige reliée à une poignée et un marteau à inertie enfilé autour de ladite tige de sorte à être fixé à la verticale lorsque la tige est fixée au raccord haute-pression de l'injecteur. L'injecteur est ensuite extrait par percussion verticale de la masse contre l'embout de la tige. Le grippage dû à la présence de calamine peut rendre cette opération difficile. Il y a donc un besoin pour un procédé et un ensemble d'outils permettant d'améliorer l'extraction de l'injecteur de son logement via son raccord haute-pression.

Les documents DE 20 2005 003 641 U1, US 5 075 947 A, JP H08 261114 A et US 5 109 739 A décrivent de tels outils et procédés.

En outre, selon les modèles d'injecteurs, les raccords haute-pression peuvent être différents, et il serait intéressant de trouver un procédé et un ensemble d'outils unique (ou universel) permettant d'extraire ces différents injecteurs. Enfin, le positionnement correct du marteau à inertie n'est pas toujours rendu possible par l'encombrement de l'environnement moteur et il serait intéressant de proposer un procédé et un ensemble d'outils pouvant s'adapter aux différents environnements moteurs.

L'invention a pour objectif de répondre à au moins un des problèmes de l'art antérieur en proposant un nouveau procédé et un nouvel outil et un nouveau kit pour l'extraction d'un injecteur qui soient simples d'utilisation, utilisables dans différents environnements moteurs, et adaptés à tout type d'injecteur.

A cet effet, et selon un premier aspect, l'invention a pour objet un extracteur pour l'extraction d'un injecteur de moteur de véhicule automobile, ledit injecteur étant coincé dans un logement et présentant un raccord haute-pression, l'extracteur comprenant :
- un tireur comprenant une hampe à l'extrémité de laquelle est fixée une poignée et présentant à son autre extrémité des moyens d'assemblage au raccord haute-pression de l'injecteur ; et
- un marteau à inertie comprenant une masse enfilée sur une tige, la tige présentant un embout à une extrémité et étant fixée par son autre extrémité au tireur au moyen d'une pièce intermédiaire ;
l'extracteur étant remarquable en ce que la pièce intermédiaire est une pièce d'articulation liée par une liaison pivot glissant à la hampe du tireur et en ce que la hampe est dimensionnée pour autoriser un coulissement de la pièce d'articulation sur sa longueur lorsque ledit extracteur est fixé sur l'injecteur.

Selon des modes particuliers de réalisation, l'extracteur peut comprendre l'une ou l'autre des caractéristiques suivantes, prises isolément ou selon toutes les combinaisons possibles :
- la pièce d'articulation est liée par une liaison pivot à une des extrémités de la tige du marteau à inertie, de préférence la pièce d'articulation présente un axe de pivotement autour de la hampe du tireur qui est perpendiculaire à l'axe de pivotement de sa liaison pivot avec le marteau à inertie.
- Les moyens d'assemblage du tireur au raccord haute-pression se présentent sous forme d'un filetage externe ou d'un alésage fileté.

L'invention concerne également un kit pour l'extraction d'un injecteur de moteur de véhicule automobile, ledit injecteur étant coincé dans un logement et présentant un raccord haute-pression, le kit comprenant un extracteur tel que défini plus haut et un ou plusieurs éléments choisis parmi :
- une pièce de liaison ;
- un adaptateur ;
- au moins un espaceur.

Selon des modes particuliers de réalisation, le kit peut comprendre l'une ou l'autre des caractéristiques suivantes, prises isolément ou selon toutes les combinaisons possibles :
- les moyens d'assemblage du tireur au raccord haute-pression se présentant sous forme d'un alésage fileté, le kit comprend en outre une pièce de liaison amovible pour la fixation de l'extracteur au raccord haute-pression de l'injecteur, ladite pièce de liaison se présentant sous forme d'une tige filetée à ses deux extrémités, de préférence d'une tige filetée sur toute sa longueur.
- les moyens d'assemblage du tireur au raccord haute-pression se présentant sous forme d'un alésage fileté ou d'un filetage externe, le kit comprend en outre un adaptateur amovible pour la fixation de l'extracteur au raccord haute-pression de l'injecteur, l'adaptateur présentant une douille destinée à recevoir le raccord haute-pression et présentant un alésage fileté ménagé dans son fond configuré pour coopérer avec un filetage externe porté par ledit raccord haute-pression, et des moyens d'assemblage complémentaires à ceux présentés par ledit tireur en vue de sa fixation au raccord haute-pression ou complémentaires à la pièce de liaison.
- au moins un espaceur amovible se présentant sous la forme d'un manchon destiné à être placé sur la hampe du tireur en vue de limiter la course de la pièce d'articulation le long de ladite hampe.

Selon un second aspect, l'invention a pour objet un procédé d'extraction d'un injecteur d'un moteur de véhicule, ledit injecteur étant coincé dans un logement et présentant un raccord haute-pression, le procédé comprenant les étapes suivantes :
a) fixation d'un extracteur au raccord haute-pression de l'injecteur ; et
b) extraction de l'injecteur au moyen de l'extracteur selon une direction parallèle à son axe longitudinal,
le procédé étant remarquable en ce qu'il comprend l'utilisation d'un extracteur ou d'un kit tels que définis plus haut, et en ce que l'étape b) comprend en outre l'entrainement en rotation de l'injecteur autour de son axe longitudinal par percussion répétées du marteau à inertie sur la hampe du tireur selon une direction différente de la direction d'extraction de l'injecteur en vue de le décoincer.

De préférence, l'étape a) de fixation de l'extracteur comprend la mise en place d'au moins un espaceur sur la hampe du tireur entre la poignée et la pièce d'articulation et/ou entre la pièce d'articulation et ledit raccord haute-pression.

De préférence, l'étape a) de fixation de l'extracteur comprend la fixation de l'extracteur au raccord haute pression au moyen d'un adaptateur et/ou d'une pièce de liaison.

De préférence encore, la pièce d'articulation est placée en butée contre la poignée du tireur ou contre un espaceur lors des opérations de percussion sur la hampe par le marteau à inertie pour la mise en rotation de l'injecteur de telle sorte à ce que la distance entre la poignée et la pièce d'articulation soit inférieure à la distance entre la pièce d'articulation et le raccord haute-pression dudit injecteur.

Comme on l'aura compris à la lecture de la définition qui vient d'en être donnée, l'invention propose un outil et un procédé d'extraction d'un injecteur permettant de décoincer l'injecteur de son logement par rotation autour de son axe longitudinal avant ou simultanément aux efforts fournis pour son extraction verticale ou selon un axe parallèle à sa direction longitudinale. Contrairement à l'art antérieur, le marteau à inertie n'est pas fixé dans une position verticale et peut être déplacé d'un côté et de l'autre de la hampe du tireur ou disposé verticalement. L'étape d'extraction de l'injecteur est réalisée avantageusement par la combinaison de deux mouvements, une translation vers le haut et une rotation selon l'axe longitudinal de l'injecteur. La mise en position du marteau à inertie selon un angle inférieur à 90 degrés avec l'horizontal permet de tirer le tireur d'un côté de l'injecteur. Lors de l'opération de décoincement, le marteau à inertie sera positionné d'un côté de la hampe du tireur selon un certain angle avec l'horizontal de sorte à entraîner en rotation l'injecteur selon son axe longitudinal dans un certain sens de rotation, puis le marteau sera passé de l'autre côté de la hampe du tireur de sorte à entraîner en rotation l'injecteur dans l'autre sens. L'angle d'inclinaison du marteau à inertie par rapport à l'horizontal peut être adapté en fonction du véhicule et de l'environnement moteur. De préférence, les opérations de percussion sont précédées d'un déplacement de la pièce d'articulation par translation le long de la hampe du tireur jusqu'à une position choisie par l'opérateur. Cette position peut être choisie pour la liberté de mouvement qu'elle procure, par exemple en butée contre la poignée du tireur ou contre un espaceur. Ainsi l'invention permet de donner du couple au forces exercées pour la mise en rotation de l'injecteur autour de son axe longitudinal et facilite donc cette opération.

L'utilisation d'espaceurs est avantageuse en ce que l'invention permet alors de maintenir la pièce d'articulation à distance de la poignée et/ou du raccord haute-pression afin de faciliter les manipulations du marteau à inertie dans un environnement moteur encombré.

L'extracteur peut être fixé directement ou indirectement au raccord haute-pression de l'injecteur. Lorsque l'extracteur est fixé indirectement au raccord haute-pression, ce dernier peut être fixé de différentes manières en fonction du profil dudit raccord haute-pression au moyen de différentes pièces de liaisons et/ou adaptateurs. L'emploi de ces pièces intermédiaires est avantageux en ce qu'elles contribuent à la protection de l'injecteur. En effet, le raccord haute-pression d'un injecteur est une pièce présentant une certaine fragilité, et l'invention permet de renforcer la fixation du tireur audit raccord haute-pression de manière à ce qu'il ne cède pas lors des opérations de rotation et d'extraction.

L'extracteur et le kit dont il fait partie sont remarquables par leur adaptabilité aux différents modèles d'injecteurs pouvant être rencontrés. Le kit est un kit d'extraction universel pouvant être utilisé sur la grande majorité des injecteurs connus à ce jour.

L'invention sera bien comprise et d'autres aspects et avantages apparaîtront clairement à la lecture de la description qui suit, donnée à titre d'exemple en référence aux planches de dessins annexées sur lesquelles :
- La figure 1a est une vue présentant l'étape d'extraction d'un injecteur au moyen d'un extracteur selon l'invention.
- La figure 1b est une vue en coupe de la représentation de la figure 1a.
- La figure 2 est une vue similaire à celle de la figure 1b à la différence que l'extracteur est doté d'un espaceur selon l'invention.
- La figure 3 est une vue en coupe de l'étape de fixation d'un extracteur selon l'invention à un injecteur.
- La figure 4a et 4b représentent deux vues en coupe de l'étape de fixation d'un extracteur selon l'invention à un même injecteur selon différents modes de réalisation.

Dans la description qui suit, le terme « comprendre » est synonyme de « inclure » et n'est pas limitatif en ce qu'il autorise la présence d'autres éléments dans l'extracteur, , le kit
et le procédé auquel il se rapporte. Il est entendu que le terme « comprendre » inclut les termes « consister en ». Sur les différentes figures, les mêmes références désignent des éléments identiques ou similaires.

Dans le présent mémoire, le procédé selon l'invention va être décrit en parallèle des outils selon l'invention pour la mise en oeuvre dudit procédé.

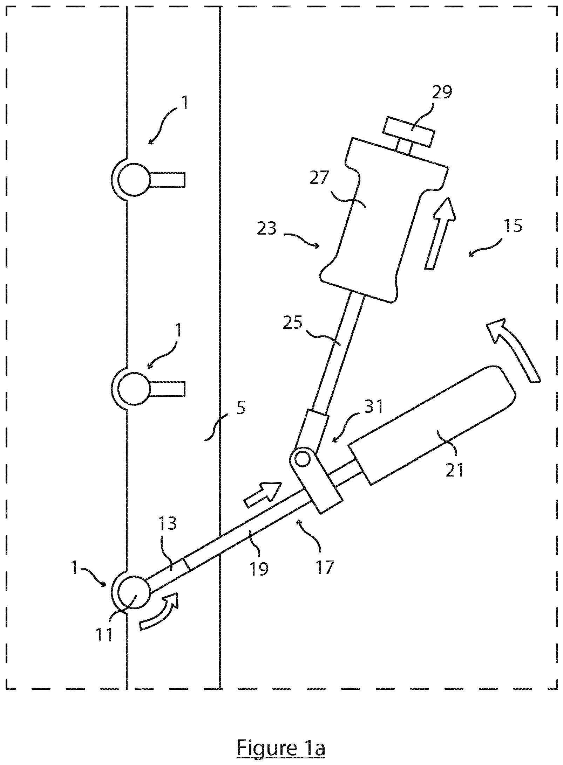

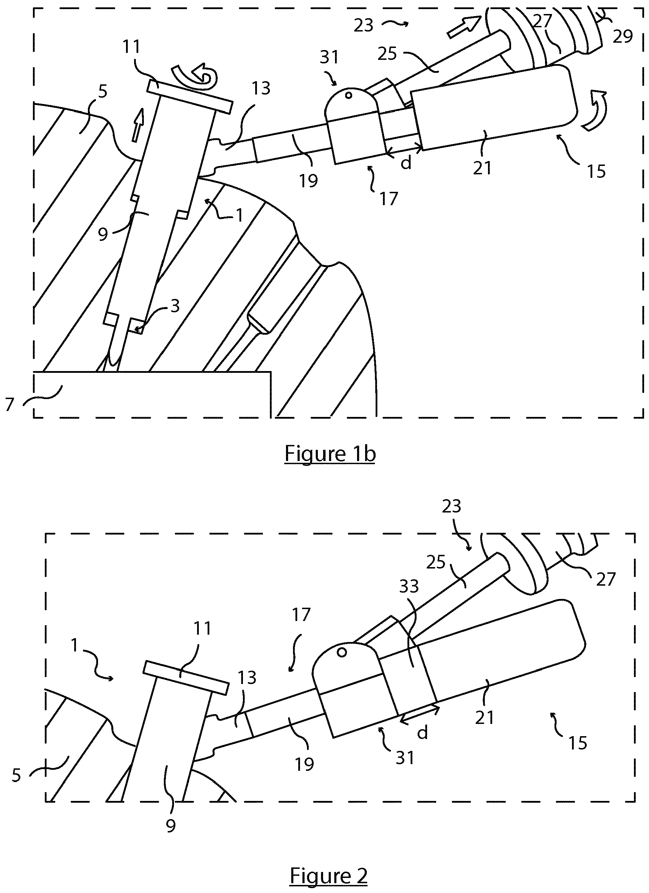

On se référera en premier lieu aux figures 1a et 1b qui représentent la même étape d'extraction d'un injecteur à l'aide d'un extracteur selon l'invention selon deux angles de vue différents. Sur la figure 1a on peut voir plusieurs injecteurs 1 dont un est train d'être extrait. Sur la figure 1b, on peut voir que l'injecteur 1 est logé dans le logement 3 d'une culasse 5 d'un moteur. Le logement 3 de l'injecteur est traversant et donne directement sur la chambre à combustion 7 du moteur. Cet injecteur 1 présente un corps 9 dont une partie fait saillie à la surface de la culasse 5. Cette partie en saillie s'étend dans la direction du reste du corps 9 et comprend à son extrémité une commande électrique 11 commandant l'injection du carburant dans la chambre à combustion 7. Le carburant arrive sous pression dans le corps 9 de l'injecteur 1 via un raccord haute-pression 13 qui s'étend depuis la partie saillante avec un certain angle.

L'extracteur 15 selon l'invention est remarquable en ce qu'il comprend plusieurs parties qui s'articulent les unes par rapport aux autres, à savoir un tireur 17, un marteau à inertie 23 et une pièce d'articulation 31. Le tireur 17 se présente sous forme d'une hampe 19, dont une extrémité est dotée d'une poignée 21 et son autre extrémité présente des moyens de fixation au raccord haute-pression 13 de l'injecteur 1. L'extracteur 15 est représenté fixé à l'injecteur 1 par une des extrémités de son tireur 17. L'extracteur 15 comprend également un marteau à inertie 23 se présentant sous forme d'une tige 25 autour de laquelle est enfilée une masse 27. La tige 25 présente à une extrémité un embout 29 et est fixée par son autre extrémité au tireur 17 par l'intermédiaire d'une pièce d'articulation 31. En effet, l'extracteur 15 selon l'invention est remarquable en ce que le marteau à inertie 23 est relié au tireur 17 au moyen d'une pièce d'articulation 31 qui peut coulisser le long de la tige 25 du tireur 17. La pièce d'articulation 31 se présente sous la forme d'une charnière avec deux parties s'articulant autour d'un axe commun. Une des parties comprend une bague enfilée autour de la hampe 19 du tireur 17 de sorte à s'articuler par une liaison pivot glissant avec cette dernière. L'autre partie est fixée au marteau à inertie 23 de sorte à ce que ce dernier s'articule par liaison pivot avec la pièce d'articulation 31 via l'axe de cette dernière. La pièce d'articulation 31 présente donc avantageusement deux types de liaisons, et de préférence la pièce d'articulation est en outre configurée pour que l'axe de pivotement avec la tige du marteau à inertie 23 soit perpendiculaire à l'axe de translation avec la hampe 19 du tireur 17.

Le procédé selon l'invention comprend les étapes suivantes :
a) fixation d'un extracteur 15 au raccord haute-pression 13 de l'injecteur 1 ; et
b) extraction de l'injecteur 1 au moyen de l'extracteur 15.

La hampe 19 du tireur 15 est configurée pour que, lors de la fixation de l'extracteur 15 au raccord haute-pression 13 de l'injecteur 1 à l'étape a), la pièce d'articulation 31 puisse coulisser le long de ladite hampe 19. La longueur de la hampe est donc au moins deux fois celle de la pièce d'articulation, de préférence au moins 3 fois. De plus, la liaison étant une liaison de type pivot coulissant, la pièce d'articulation 31 peut être positionnée d'un côté ou de l'autre de la hampe 19 du tireur 17 pour la réalisation de l'étape b).

En effet, le procédé est remarquable en ce que l'étape b) d'extraction de l'injecteur 1 comprend le décoincement de l'injecteur 1 par la mise en position de la tige du marteau à inertie 23 selon un angle inférieur à 90 degrés avec l'horizontal, et la percussion de la masse 27 sur l'embout 29 de la tige 25 de sorte à entraîner le tireur 17 et l'injecteur 1 en rotation autour de l'axe longitudinal de l'injecteur 1. L'angle que fait le marteau à inertie avec l'horizontal peut être par exemple inférieur à 60 degrés, ou inférieur à 45 degrés, ou inférieur à 30 degrés, ou inférieur à 20 degrés ou être à l'horizontal.

Cette opération peut être répétée plusieurs fois du même côté de la hampe 19 du tireur 17 jusqu'à ce que le positionnement marteau à inertie 23 soit gêné par l'environnement moteur, puis répétée de l'autre côté de la hampe 19 du tireur 17 avec par exemple par intermittence des percussions verticales de la masse 27 sur l'embout 29 de la tige 25 du marteau à inertie 23, et ainsi de suite jusqu'à ce que l'injecteur 1 soit extrait de son logement 3. De tels mouvements conjoints permettent de faciliter l'extraction de l'injecteur 1 de son logement 3.

Lors de l'opération d'extraction de l'injecteur 1, l'environnement moteur peut gêner la manipulation du marteau à inertie de sorte qu'il est préférable que la pièce d'articulation 31 ne se rapproche pas de la poignée 21 du tireur 17 de plus d'une distance « d », comme représenté en figure 1b. Dans un tel cas et afin de protéger les éléments de l'environnement moteur lors de la manipulation du marteau à inertie 23, un ou plusieurs espaceurs 33 peuvent être mis en place lors de l'étape a) le long de la hampe 19 du tireur 17 entre la poignée du tireur et la pièce d'articulation, comme représenté en figure 2. Ce ou ces espaceurs 33 se présentent sous la forme d'un manchon comprenant un canal central le traversant de part et d'autre et dont le diamètre est adapté pour que ledit manchon puisse coulisser le long de la hampe 19 du tireur 17.

Lors des percussions du marteau à inertie 23, la pièce d'articulation 31 est placée en butée contre la poignée 21 du tireur 17 ou contre un espaceur 33 lorsque ce dernier est présent, de sorte à ce que la distance entre la pièce d'articulation 31 et la poignée 21 du tireur 17 soit inférieure à la distance entre la pièce d'articulation 31 et le raccord haute pression 13.

Classiquement le raccord haute=pression 13 comprend une extrémité libre présentant un filetage externe ou un alésage fileté. Dès lors les moyens d'assemblage du tireur au raccord haute-pression se présentent sous forme d'un filetage externe ou d'un alésage fileté. La fixation de l'extracteur 15 au raccord haute-pression 13 de l'injecteur 1 peut être directe ou indirecte, de préférence elle est indirecte.

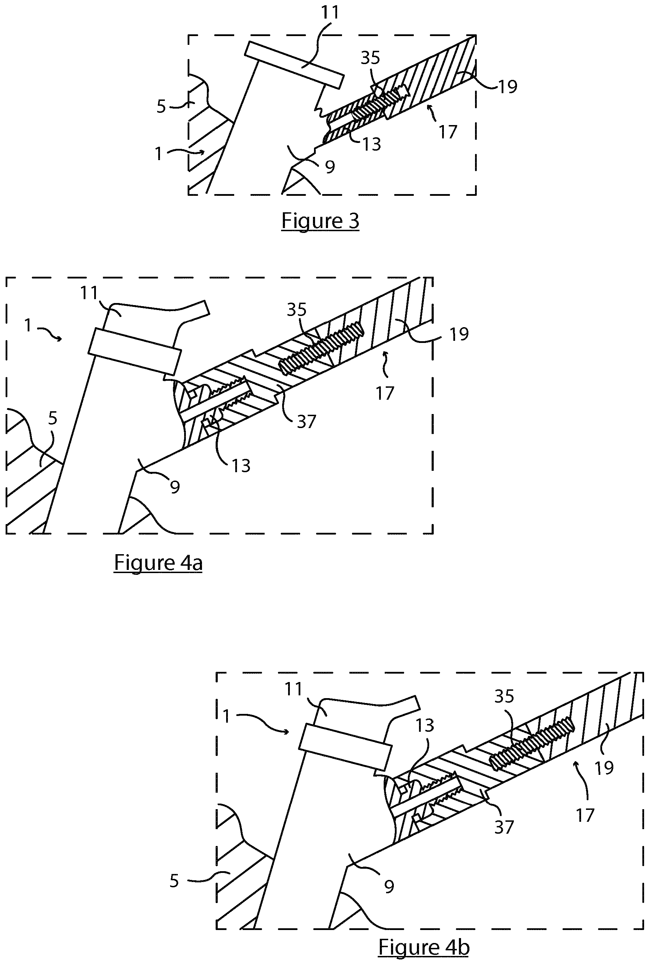

La figure 3 illustre le cas de la fixation indirecte du tireur 17 à un raccord haute-pression 13 présentant à son extrémité libre un alésage fileté. Sur cette vue en coupe on peut voir que les moyens d'assemblage du tireur 17 se présentent sous la forme d'un alésage filetée et sont fixés au raccord haute-pression 13 par l'intermédiaire d'une pièce de liaison 35. Cette pièce de liaison se présente sous la forme d'une tige filetée à ses deux extrémités, dont une extrémité est vissée dans l'alésage fileté du raccord haute-pression 13, et l'autre est vissée aux moyens d'assemblage du tireur 17. L'étape a) de fixation de l'extracteur 15 au raccord haute-pression 13 s'achève lorsque le tireur 17 entre en butée contre le raccord haute-pression 13. Cette mise en butée participe en outre la robustesse de la fixation de l'extracteur au raccord haute pression.

Les figures 4a et 4b illustrent deux modes de réalisation dans le cas de la fixation indirecte du tireur 17 à un raccord haute-pression 13 présentant à son extrémité libre un filetage externe. Classiquement ladite extrémité filetée présente en outre un diamètre inférieur au diamètre du reste du raccord haute-pression 13. Selon un premier mode de réalisation de l'invention représenté en figure 4a, les moyens d'assemblage du tireur 17 se présentent sous la forme d'un alésage fileté et sont fixés au raccord haute pression par l'intermédiaire d'une pièce de liaison 35 telle que décrite plus haut et d'un adaptateur 37. Ledit adaptateur 37 présente des moyens d'assemblage au tireur 17 complémentaires au filetage externe de la pièce de liaison et une douille destinée à recevoir le raccord haute-pression 13. La douille présente un alésage fileté ménagé dans son fond et configuré pour coopérer avec le filetage externe porté par l'extrémité libre du raccord haute-pression 13. L'étape a) de fixation de l'extracteur 15 au raccord haute-pression 13 s'achève lorsque le l'adaptateur 37 est entré en butée contre la hampe 19 du tireur 17 et le raccord haute-pression 13 ou le corps 9 de l'injecteur 1. La douille est configurée pour pouvoir coopérer avec une partie des parois externes non filetée du raccord haute-pression 13 et participe ainsi à la robustesse de la fixation de l'extracteur 15 au raccord haute-pression 13.

Alternativement et selon un second mode de réalisation représenté en figure 4b, les moyens d'assemblage du tireur 17 se présentent sous la forme d'un filetage externe et sont fixés au raccord haute-pression 13 par l'intermédiaire d'un adaptateur 37 tel que décrit précédemment dans lequel les moyens d'assemblage sont ici complémentaires à ceux présentés par le tireur 17. L'étape a) de fixation de l'extracteur 15 au raccord haute-pression 13 s'achève lorsque le l'adaptateur 37 est entré en butée contre la hampe 19 du tireur 17 et le raccord haute-pression 13 ou le corps 9 de l'injecteur 1.

## Revendications

1. Extracteur (15) pour l'extraction d'un injecteur (1) de moteur de véhicule automobile, ledit injecteur (1) étant coincé dans un logement (3) et présentant un raccord haute-pression (13), l'extracteur comprenant :
- un tireur (17) comprenant une hampe (19) à l'extrémité de laquelle est fixée une poignée (21) et présentant à son autre extrémité des moyens d'assemblage au raccord haute-pression (13) de l'injecteur (1) ; et
- un marteau à inertie (23) comprenant une masse (27) enfilée sur une tige (25), la tige (25) présentant un embout (29) à une extrémité et étant fixée par son autre extrémité au tireur (17) au moyen d'une pièce intermédiaire.
l'extracteur (15) étant **caractérisé en ce que** la pièce intermédiaire est une pièce d'articulation (31) liée par une liaison pivot glissant à la hampe (19) du tireur (17) et **en ce que** la hampe (19) est dimensionnée pour autoriser un coulissement de la pièce d'articulation (31) sur sa longueur lorsque ledit extracteur (15) est fixé sur l'injecteur (1).

2. Extracteur (15) selon la revendication 1, **caractérisé en ce que** la pièce d'articulation (31) est liée par une liaison pivot à une des extrémités de la tige (25) du marteau à inertie (23) ; de préférence la pièce d'articulation (31) présente un axe de pivotement autour de la hampe (19) du tireur (17) qui est perpendiculaire à l'axe de pivotement de sa liaison pivot avec le marteau à inertie (23).

3. Extracteur (15) selon l'une des revendications 1 ou 2 **caractérisé en ce que** les moyens d'assemblage du tireur (17) au raccord haute-pression (13) se présentent sous forme d'un filetage externe ou d'un alésage fileté.

4. Kit d'extraction d'un injecteur (1) de moteur de véhicule automobile, ledit injecteur (1) étant coincé dans un logement (3) et présentant un raccord haute-pression (13), le kit comprenant un extracteur (15) selon l'une des revendications 1 à 3 et un ou plusieurs éléments choisis parmi une pièce de liaison (35), un adaptateur (37) et au moins un espaceur (33).

5. Kit d'extraction selon la revendication 4, les moyens d'assemblage du tireur (17) au raccord haute-pression (13) se présentant sous forme d'un alésage fileté, **caractérisé en ce qu'**il comprend en outre une pièce de liaison (35) amovible pour la fixation de l'extracteur (15) au raccord haute-pression (13) de l'injecteur (1), ladite pièce de liaison (35) se présentant sous forme d'une tige filetée à ses deux extrémités, de préférence d'une tige filetée sur toute sa longueur.

6. Kit d'extraction selon la revendication 4 ou 5, les moyens d'assemblage du tireur (17) au raccord haute-pression (13) se présentant sous forme d'un alésage fileté ou d'un filetage externe, le kit étant **caractérisé en ce qu'**il comprend en outre un adaptateur (37) amovible pour la fixation de l'extracteur au raccord haute-pression (13) de l'injecteur (1), l'adaptateur (37) présentant une douille destinée à recevoir le raccord haute-pression (13) et présentant un alésage fileté ménagé dans son fond configuré pour coopérer avec un filetage externe porté par ledit raccord haute-pression (13), et des moyens d'assemblage complémentaires à ceux présentés par ledit tireur (17) en vue de sa fixation au raccord haute-pression (13) ou complémentaires à la pièce de liaison (35).

7. Kit d'extraction selon l'une des revendications 4 à 6, **caractérisé en ce qu'**il comprend en outre au moins un espaceur (33) amovible se présentant sous la forme d'un manchon destiné à être placé sur la hampe (19) du tireur (17) en vue de limiter la course de la pièce d'articulation (31) le long de ladite hampe (19).

8. Procédé d'extraction d'un injecteur (1) d'un moteur de véhicule, ledit injecteur (1) étant coincé dans un logement (3) et présentant un raccord haute-pression (13), le procédé comprenant les étapes suivantes :
a) fixation d'un extracteur (15) au raccord haute-pression (13) de l'injecteur (1) ; et
b) extraction de l'injecteur (1) au moyen de l'extracteur (15) selon une direction parallèle à son axe longitudinal,
le procédé étant **caractérisé en ce qu'**il comprend l'utilisation d'un extracteur (15) selon l'une des revendications 1 à 7 et **en ce que** l'étape b) comprend en outre l'entrainement en rotation de l'injecteur (1) autour de son axe longitudinal par percussion répétées du marteau à inertie (23) sur la hampe (19) du tireur (17) selon une direction différente de la direction d'extraction de l'injecteur (1) en vue de le décoincer.

9. Procédé d'extraction selon la revendications 8 **caractérisé en ce que** l'étape a) de fixation de l'extracteur (15) comprend la mise en place d'au moins un espaceur (33) sur la hampe (19) du tireur (17) entre la poignée (21) et la pièce d'articulation (31) et/ou entre la pièce d'articulation (31) et ledit raccord haute-pression (13).

10. Procédé d'extraction selon l'une des revendications 8 ou 9, **caractérisé en ce que** la pièce d'articulation (31) est placée en butée contre la poignée (19) du tireur (17) ou contre un espaceur (33) lors des opérations de percussion sur la hampe (19) pour la mise en rotation de l'injecteur (1) de telle sorte à ce que la distance entre la poignée (21) et la pièce d'articulation (31) soit inférieure à la distance entre la pièce d'articulation (31) et le raccord haute-pression (13) dudit injecteur (1).

## Patentansprüche

1. Zange (15) zur Extraktion eines Einspritzers (1) eines Kraftfahrzeugmotors, wobei der genannte Einspritzer (1) in einer Aufnahme (3) eingeklemmt ist und einen Hochdruckanschluss (13) aufweist, wobei die Zange umfasst:
- eine Zugvorrichtung (17), umfassend einen Schaft (19), an dessen Ende ein Griff (21) befestigt ist und der an seinem anderen Ende Montagemittel am Hochdruckanschluss (13) des Einspritzers (1) aufweist; und
- einen Ausziehhammer (23), umfassend einen Bär (27), der auf einem Stift (25) aufgefädelt ist, wobei der Stift (25) einen Ansatz (29) an einem Ende aufweist und durch sein anderes Ende an der Zugvorrichtung (17) mittels eines Zwischenstücks befestigt ist,
wobei die Zange (15) **dadurch gekennzeichnet ist, dass** das Zwischenstück ein Artikulationsstück (31) ist, das durch eine Schwenkverbindung verbunden ist, die zum Schaft (19) der Zugvorrichtung (17) gleitet, und dass der Schaft (19) dazu ausgelegt ist, um ein Gleiten des Artikulationsstücks (31) auf seiner Länge zu erlauben, wenn die genannte Zange (15) auf dem Einspritzer (1) befestigt ist.

2. Zange (15) gemäß Anspruch 1, **dadurch gekennzeichnet, dass** das Artikulationsstück (31) durch eine Schwenkverbindung an einem der Enden des Stiftes (25) des Ausziehhammers (23) verbunden ist; bevorzugt weist das Artikulationsstück (31) eine Schwenkachse um den Schaft (19) der Zugvorrichtung (17) auf, die lotrecht zur Schwenkachse ihrer Schwenkverbindung mit dem Ausziehhammer (23) ist.

3. Zange (15) gemäß einem der Ansprüche 1 oder 2, **dadurch gekennzeichnet, dass** die Montagemittel der Zugvorrichtung (17) am Hochdruckanschluss (13) die Form eines Außengewindes oder einer Gewindebohrung aufweisen.

4. Extraktionskit eines Einspritzers (1) eines Kraftfahrzeugmotors, wobei der genannte Einspritzer (1) in einer Aufnahme (3) eingeklemmt ist und einen Hochdruckanschluss (13) aufweist, wobei das Kit eine Zange (15) gemäß einem der Ansprüche 1 bis 3 und ein oder mehrere Elemente aufweist, die aus einem Verbindungsstück (35), einem Adapter (37) und wenigstens einem Abstandshalter (33) ausgewählt sind.

5. Extraktionskit gemäß Anspruch 4, wobei die Montagemittel der Zugvorrichtung (17) am Hochdruckanschluss (13) die Form einer Gewindebohrung aufweisen, **dadurch gekennzeichnet, dass** es darüber hinaus ein abnehmbares Verbindungsstück (35) für die Befestigung der Zange (15) am Hochdruckanschluss (13) des Einspritzers (1) umfasst, wobei das genannte Verbindungsstück (35) an seinen zwei Enden die Form eines Gewindestiftes, bevorzugt eines über seine gesamte Länge gewindeten Stifts aufweist.

6. Extraktionskit gemäß Anspruch 4 oder 5, wobei die Montagemittel der Zugvorrichtung (17) am Hochdruckanschluss (13) die Form einer Gewindebohrung oder eines Außengewindes aufweisen, wobei das Kit **dadurch gekennzeichnet ist, dass** es darüber hinaus einen abnehmbaren Adapter (37) für die Befestigung der Zange am Hochdruckanschluss (13) des Einspritzers (1), wobei der Adapter (37) eine Fassung aufweist, die zum Aufnehmen des Hochdruckanschlusses (13) bestimmt ist und eine Gewindebohrung aufweist, die in ihrem Boden ausgespart ist, der konfiguriert ist, um mit einem Außengewinde zusammenzuwirken, das von dem genannten Hochdruckanschluss (13) getragen ist, und Montagemittel, die zu denen komplementär sind, die von der genannten Zugvorrichtung (17) zwecks seiner Befestigung am Hochdruckanschluss (13) aufgewiesen sind oder zum Verbindungsstück (35) komplementär sind, umfasst.

7. Extraktionskit gemäß einem der Ansprüche 4 bis 6, **dadurch gekennzeichnet, dass** es darüber hinaus wenigstens einen abnehmbaren Abstandshalter (33) umfasst, der die Form eines Stutzen aufweist, der dazu bestimmt ist, auf dem Schaft (19) der Zugvorrichtung (17) platziert zu sein, um den Lauf des Artikulationsstücks (31) entlang des genannten Schafts (19) zu begrenzen.

8. Extraktionsverfahren eines Einspritzers (1) eines Fahrzeugmotors, wobei der genannte Einspritzer (1) in einer Aufnahme (3) eingeklemmt ist und einen Hochdruckanschluss (13) aufweist, wobei das Verfahren die folgenden Schritte umfasst:
a) Befestigung einer Zange (15) am Hochdruckanschluss (13) des Einspritzers (1); und
b) Extraktion des Einspritzers (1) mittels der Zange (15) gemäß einer zu seiner Längsachse parallelen Richtung,
wobei das Verfahren **dadurch gekennzeichnet ist, dass** es die Nutzung einer Zange (15) gemäß einem der Ansprüche 1 bis 7 umfasst und dass der Schritt b) darüber hinaus das Antreiben des Einspritzers (1) in Rotation um seine Längsachse per wiederholtem Aufschlagen des Ausziehhammers (23) auf dem Schaft (19) der Zugvorrichtung (17) gemäß einer unterschiedlichen Richtung der Extraktionsrichtung des Einspritzers (1) zwecks dessen Lockerung umfasst.

9. Extraktionsverfahren gemäß Anspruch 8, **dadurch gekennzeichnet, dass** der Schritt a) zur Befestigung der Zange (15) das Einsetzen wenigstens eines Abstandshalters (33) auf dem Schaft (19) der Zugvorrichtung (17) zwischen dem Griff (21) und dem Artikulationsstück (31) und / oder zwischen dem Artikulationsstück (31) und dem genannten Hochdruckanschluss (13) umfasst.

10. Extraktionsverfahren gemäß einem der Ansprüche 8 oder 9, **dadurch gekennzeichnet, dass** das Artikulationsstück (31) am Anschlag gegen den Griff (19) der Zugvorrichtung (17) oder gegen einen Abstandshalter (33) bei Aufschlagoperationen auf den Schaft (19) platziert ist, um den Einspritzer (1) derart zum Drehen zu bringen, dass die Entfernung zwischen dem Griff (21)und dem Artikulationsstück (31) geringer ist als die Entfernung zwischen dem Artikulationsstück (31) und dem Hochdruckanschluss (13) des genannten Einspritzers (1).

## Claims

1. Extractor (15) for extracting an injector (1) from an engine of a motor vehicle, the said injector (1) being stuck in a housing (3) and having a high-pressure connector (13), the extractor comprising:
- a puller (17) with a shaft (19) at the one end of which is attached a handle (21) and having, at the other end, means for assembly to the high-pressure connector (13) of the injector, and
- a slide hammer (23) comprising a mass (27) threaded onto a rod (25), the rod (25) having a nozzle (29) at one end and being attached to the puller (17) at its other end by means of a connecting component,
the extractor (15) being **characterised in that** the connecting component is a joint component (31) connected by a sliding pivoting connector to the shaft (19) of the puller (17) and **in that** the shaft (19) is of a size that allows sliding of the joint component (31) along its length when the said extractor (15) is attached to the injector (1).

2. Extractor (15) according to claim 1, **characterised in that** the joint component (31) is attached by a pivoting connector at one end of the rod (25) of the slide hammer (23); preferably, the joint component (31) has a pivot axis around the shaft (19) of the puller (17) that is perpendicular to the pivot axis of its pivoting connector with the slide hammer (23).

3. Extractor (15) according to one of the claims 1 or 2 **characterised in that** the means to assemble the puller (17) on the high-pressure connector (13) are in the form of an external thread or a threaded bore.

4. Extraction kit for an injector (1) of an engine of a motor vehicle, the said injector (1) being stuck in a housing (3) and having a high-pressure connector (13), the kit comprising an extractor (15) according to one of the claims 1 to 3 and one or more elements selected from a connecting component (35), an adapter (37) and at least one spacer (33).

5. Extraction kit according to claim 4, the means to assemble the puller (17) on the high-pressure connector (13) being in the form of a threaded bore, **characterised in that** it further includes a detachable connecting component (35) for the fastening of the extractor (15) on the high-pressure connector (13) of the injector (1),
the said connecting component (35) being in the form of a threaded rod at both its ends, preferably a threaded rod along its entire length.

6. Extraction kit according to claim 4 or 5, the means for assembling the puller (17) on the high-pressure connector (13) being in the form of a threaded bore or an external thread, the kit being **characterised in that** it further comprises a detachable adapter (37) for the fastening of the extractor on the high-pressure connector (13) of the injector (1), the adapter (37) having a socket to receive the high-pressure connector (13) and having a threaded bore provided at its bottom configured to operate with an external thread supported by the said high-pressure connector (13) and means of assembly in addition to those already presented by the said puller (17) to fasten it to the high pressure connector (13) or in addition to the connecting component (35).

7. Extraction kit according to any of claims 4 to 6, **characterised in that** it further comprises at least one detachable spacer (33) that is in the form of a sleeve to be placed on the shaft (19) of the puller (17) to limit the movement of the joint component (31) along the said shaft (19).

8. Procedure for extracting an injector (1) of an engine of a motor vehicle, the said injector (1) being stuck in a housing (3) and having a high-pressure connector (13), the procedure comprising the following steps:
a) fastening an extractor (15) on the high-pressure connector (13) of the injector (1); and
b) extracting the injector (1) by means of the extractor (15) in a direction parallel to its longitudinal axis,
the procedure being **characterised in that** it includes the use of an extractor (15) according to any of claims 1 to 7 and **in that** step b) also includes driving the injector (1) into rotation around its longitudinal axis by repeatedly impacting the shaft (19) of the puller (17) with the slide hammer (23) in a direction different from the extraction direction of the injector (1) in order to release it.

9. Extraction process according to claim 8, **characterised in that** step a) of fastening the extractor (15) includes positioning of at least one spacer (33) on the shaft (19) of the puller (17) between the handle (21) and the joint component (31) and/or between the joint component (31) and the said high-pressure connector (13).

10. Extraction process according to any of claims 8 to 9, **characterised in that** the joint component (31) is positioned at the stop position against the handle (19) of the puller (17) or against a spacer (33) during the impact operations on the shaft (19) for the rotation of the injector (1) such that the distance between the handle (21) and the joint component (31) is less than the distance between the joint component (31) and the high-pressure connector (13) of the said injector (1).
